# FASCICULE DE BREVET EUROPEEN

(11) **EP 4 313 650 B1**
(45) Date de publication et mention de la délivrance du brevet: **21.01.2026**
(21) Numéro de dépôt: 22710698.6
(22) Date de dépôt: 25.02.2022
(51) Int. Cl.: B60K 11/08, B62D 25/08

(54) **ENSEMBLE DE RÉGULATION D'UN FLUX D'AIR POUR VÉHICULE AUTOMOBILE**
ANORDNUNG ZUR REGELUNG EINES LUFTSTROMS FÜR EIN KRAFTFAHRZEUG
ASSEMBLY FOR REGULATING AN AIR FLOW FOR A MOTOR VEHICLE

(30) Priorité: 26.03.2021 FR 2103090
(43) Date de publication de la demande: 07.02.2024
(73) Titulaire: Stellantis Auto SAS, 78300 Poissy (FR)
(72) Inventeur: GOURVENNEC, Thibault, 91210 DRAVEIL (FR)
(74) Mandataire: BCIP
(86) Numéro de dépôt international: PCT/FR2022/050346
(87) Numéro de publication internationale: WO 2022/200709

(56) Documents cités:
- DE-A1- 102015 205 839
- DE-U1- 202004 010 030
- FR-A1- 3 008 060
- FR-A1- 3 062 347
- FR-A1- 3 081 785

## Description

La présente invention revendique la priorité de la demande française 2103090 déposée le 26.03.2021.

Le contexte technique de la présente invention est celui des dispositifs de régulation d'un flux d'air en façade des véhicules automobiles. Plus particulièrement, l'invention a trait à un ensemble de régulation d'un flux d'air pour véhicule automobile.

Dans l'état de la technique, on connait des systèmes d'admission d'air destinés à alimenter en air extérieur un circuit de régulation thermique du véhicule automobile. Le circuit de régulation thermique du véhicule automobile configuré pour réguler thermiquement une installation de ventilation, de chauffage, et/ou de climatisation autrement appelée installation HVAC, pour l'acronyme anglais « Heating, Ventilating and Air-Conditioning », et/ou un système moteur du véhicule automobile aussi appelé bloc moteur du véhicule automobile. Notamment, ces systèmes d'admission d'air permettent d'améliorer la vitesse de montée en température du moteur du véhicule automobile, par exemple en empêchant l'entrée d'air froid extérieur audit véhicule automobile au démarrage.

On connait des systèmes d'admission d'air compris dans une traverse de bloc avant du véhicule automobile, située en arrière d'un pare-chocs avant du véhicule automobile. En amont de la traverse de bloc avant du véhicule automobile, une entrée d'air est destinée à alimenter en air le système d'admission d'air.

Il est connu d'utiliser des volets d'obturation mobiles en face avant du véhicule automobile afin d'améliorer le fonctionnement des systèmes d'admission d'air. Les volets d'obturation mobiles peuvent être pilotés afin d'être soit ouverts pour laisser passer le maximum d'air, soit plus ou moins refermés afin d'obturer, partiellement ou entièrement, le passage de l'air. Un type de volet d'obturation mobile est formé d'un clapet rapporté sur le pare-chocs avant du véhicule automobile, en amont de l'entrée d'air destinée à alimenter en air le système d'admission d'air.

Des exemples de systèmes d'admission d'air sont aussi montrés dans les documents FR3062347A1, FR3008 060A1 et DE102015205839A1.

L'inconvénient de ces volets d'obturation mobiles est que la régulation du flux d'air intégrant le système d'admission d'air est peu optimale. En effet, le clapet rapporté sur le pare-chocs avant du véhicule automobile tend à mal se positionner par rapport à l'entrée d'air destinée à alimenter en air le système d'admission d'air. Une orientation du flux d'air destiné à intégrer le système d'admission d'air peut ainsi être améliorée.

La présente invention a pour objet de proposer un nouvel ensemble de régulation d'un flux d'air pour véhicule automobile afin de répondre au moins en grande partie aux problèmes précédents et de conduire en outre à d'autres avantages.

Un autre but de l'invention est de proposer un ensemble de régulation d'un flux d'air pour véhicule automobile simple, tant du point de vue de son montage, que du point de vue de sa mise en œuvre et de sa fabrication.

Un autre but de l'invention est de proposer un ensemble de régulation d'un flux d'air pour véhicule automobile qui soit peu onéreux, de sorte à limiter le coût d'un tel ensemble de régulation d'un flux d'air par rapport aux ensembles de régulation d'un flux d'air pour véhicules automobiles existants.

Un autre but de l'invention est de proposer un ensemble de régulation d'un flux d'air pour véhicule automobile qui soit configurée pour limiter le nombre d'opérations nécessaires à son assemblage, de sorte à optimiser le temps de production dudit ensemble de régulation d'un flux d'air.

Un autre but de l'invention est de proposer un ensemble de régulation d'un flux d'air pour véhicule automobile qui soit plus satisfaisant en termes d'orientation d'un flux d'air destiné à intégrer un système d'admission d'air en façade du véhicule automobile.

Selon un premier aspect de l'invention, on atteint au moins l'un des objectifs précités avec un ensemble de régulation d'un flux d'air pour véhicule automobile, l'ensemble de régulation étant destiné à être monté en face avant et en arrière d'un pare-chocs du véhicule automobile, l'ensemble de régulation comportant (i) une traverse présentant un conduit destiné à laisser passer un flux d'air provenant de l'avant de l'ensemble de régulation, le conduit étant ménagé entre une face avant de la traverse et une face arrière de la traverse, (ii) un volet mobile en rotation entre une position d'ouverture et une position de fermeture du conduit, le volet pivotant autour d'un axe de rotation, et le volet mobile est fixé solidairement à la traverse, le volet mobile pouvant pivoter autour de son axe de rotation et relativement à la traverse, caractérisé en ce que le volet mobile comporte, au niveau d'une surface arrière située du côté de la traverse, une dorsale qui s'étend en saillie de la surface arrière, la traverse comportant une rainure située en regard de la dorsale afin de permettre au volet mobile de pouvoir pivoter autour de son axe.

L'ensemble de régulation conforme au premier aspect de l'invention est destiné à être situé en arrière du pare-chocs du véhicule automobile, le pare-chocs du véhicule automobile correspondant à un pare-chocs avant. Le positionnement « en arrière » du pare-chocs du véhicule automobile est considéré relativement à un axe longitudinal du véhicule automobile. L'ensemble de régulation selon l'invention est destiné à être fixé solidairement au pare-chocs du véhicule automobile.

Dans le véhicule automobile qu'il équipe, l'ensemble de régulation conforme au premier aspect de l'invention est destiné à réguler un apport en air extérieur destiné à alimenter un circuit de régulation thermique du véhicule automobile. Dans le véhicule automobile équipé de l'ensemble de régulation selon l'invention, le flux d'air est capté en face avant du véhicule automobile avant d'intégrer l'ensemble de régulation.

Dans l'ensemble de régulation conforme au premier aspect de l'invention, le conduit de la traverse est destiné à canaliser le flux d'air provenant de l'avant de l'ensemble de régulation. Le conduit de la traverse permet au flux d'air de circuler au travers de la traverse depuis la face avant de la traverse vers la face arrière de la traverse. La face avant de la traverse est destinée à être en avant de la face arrière de la traverse dans le véhicule automobile équipé de l'ensemble de régulation selon l'invention.

Dans l'ensemble de régulation conforme au premier aspect de l'invention, le volet mobile est destiné à réguler l'entrée du flux d'air dans le conduit de la traverse. Dans le véhicule automobile équipé de l'ensemble de régulation selon l'invention, le flux d'air est canalisé par le conduit et orienté vers le circuit de régulation thermique du véhicule automobile lorsque le volet mobile de l'ensemble de régulation est en position d'ouverture ou dans une position intermédiaire entre la position d'ouverture et la position de fermeture. Le flux d'air est bloqué lorsque le volet mobile de l'ensemble de régulation est en position de fermeture, et le conduit de la traverse est non alimenté. Conformément à l'invention, le flux d'air entrant dans le conduit de la traverse alimente intégralement le circuit de régulation thermique dans le véhicule automobile équipé de l'ensemble de régulation selon l'invention.

Conformément à l'invention, le volet mobile est fixé solidairement à la traverse, le volet mobile pouvant pivoter autour de son axe de rotation et relativement à la traverse. En étant solidaire de la traverse, le volet mobile adopte un positionnement fiable et reproductible par rapport au conduit de la traverse. L'invention conforme à son premier aspect permet ainsi avantageusement que l'alimentation du conduit de la traverse en flux d'air provenant de l'avant de l'ensemble de régulation soit optimale.

Un tel ensemble de régulation, pourvu d'un volet mobile fixé solidairement à la traverse, permet d'assurer une régulation du flux d'air en amont et au travers du conduit de la traverse. Ainsi, cette solution permet de préserver l'ensemble de régulation d'une déviation du flux d'air en amont du conduit, tout en étant simple à mettre en œuvre. L'ensemble de régulation selon l'invention présente l'avantage de pallier les inconvénients cités plus haut, sans avoir à apporter de modification importante au véhicule automobile qu'il équipe.

L'ensemble de régulation conforme au premier aspect de l'invention comprend avantageusement au moins un des perfectionnements ci-dessous, les caractéristiques techniques formant ces perfectionnements pouvant être prises seules ou en combinaison conformément aux revendications:
- le volet mobile est fixé solidairement sur la face avant de la traverse ;
- le volet mobile est rapporté sur la traverse, le volet mobile comportant des organes de fixation afin de le fixer solidairement à la traverse. Les organes de fixation fixent solidairement le volet mobile à la traverse selon une liaison mobile en rotation. Le volet mobile et les organes de fixation sont mobiles en rotation autour de l'axe de rotation du volet mobile et relativement à la traverse ;
- les organes de fixation sont du type détachable. Par « détachables », on entend que les organes de fixation rendent le volet mobile amovible par rapport à la traverse. Le volet mobile et la traverse peuvent être détachés l'un de l'autre et rattachés l'un à l'autre. De tels organes de fixation facilitent la maintenance du volet mobile et son remplacement ;
- selon un premier mode de réalisation, les organes de fixation prennent la forme d'un clip collaborant par engagement de formes complémentaires avec un élément de fixation de la traverse. Avantageusement, l'élément de fixation de la traverse est formé sur la face avant de la traverse ;
- l'élément de fixation de la traverse prend la forme de rainures configurées pour recevoir par emmanchement les organes de fixation du volet mobile. En d'autres termes, les organes de fixation du volet mobile sont montés en force par les éléments de fixation de la traverse, et ils sont retenus dans lesdits éléments de fixation. On entend par rainures le fait que l'élément de fixation forme une pluralité d'entailles chacune creuse, longue et étroite. Un profil transverse de la rainure est creux, de sorte à ce qu'un fond de rainure soit la partie la plus profonde de la rainure ;
- les organes de fixation du volet mobile sont situés de part et d'autre du volet mobile, les éléments de fixation de la traverse étant situés de part et d'autre du conduit. On comprend que le volet mobile est compris entre au moins deux organes de fixation du volet mobile. Les organes de fixation du volet mobile sont situés sur des bords opposés du volet mobile. Par exemple, les organes de fixation du volet mobile sont situés sur des bords latéraux du volet mobile opposés l'un à l'autre, et/ou les organes de fixation du volet mobile sont situés sur des bords longitudinaux du volet mobile opposés l'un à l'autre ;
- les organes de fixation du volet mobile matérialisent l'axe de rotation du volet mobile, ledit volet mobile, et éventuellement les organes de fixation dudit volet mobile, pouvant pivoter autour de l'axe de rotation et relativement à la traverse. Ainsi, selon une première variante de réalisation, les organes de fixation matérialisent l'axe de rotation du volet mobile et le volet mobile pivote autour de ses organes de fixation, ceux-ci demeurant immobiles. Selon une deuxième alternative préférée, le volet mobile est solidaire de ses organes de fixation, et ces derniers sont mobiles en rotation par rapport aux éléments de fixation de la traverse avec lesquelles ils coopèrent ;
- le volet mobile prend la forme d'une plaque délimitée par deux bords latéraux et deux bords longitudinaux, les organes de fixation étant situés au niveau des bords latéraux du volet mobile. Le volet mobile prend la forme d'une plaque. Le volet mobile est alors une pièce globalement plane, qui s'étend dans un plan principal. Un tel volet mobile est peu encombrant et a une fabrication simplifiée. Dans le volet mobile formé d'une plaque, les deux bords latéraux sont opposés l'un à l'autre et les deux bords longitudinaux sont opposés l'un à l'autre. Les termes « longitudinaux » et « latéraux » sont à considérés relativement à un axe d'extension principal du conduit de la traverse, l'axe d'extension principal du conduit de la traverse étant transversal à l'axe de rotation du volet mobile ;
- selon un deuxième mode de réalisation alternatif au premier mode de réalisation, les organes de fixation du volet mobile prennent la forme de portées cylindriques qui s'étendent en saillie au-delà des bords latéraux, les portées cylindriques étant coaxiales entre elles et matérialisant l'axe de rotation autour duquel le volet mobile pivote relativement à la traverse. Les portée cylindriques formant les organes de fixation collaborent par engagement de formes complémentaires avec un élément de fixation de la traverse. Avantageusement, l'élément de fixation de la traverse est formé sur la face avant de la traverse. On peut généraliser à des organes de fixation formant une partie mâle en saillie du volet mobile, avantageusement en saillie des bords latéraux, et collaborant par engagement de formes complémentaires avec une partie femelle formée sur la traverse, avantageusement sur la face avant de la traverse ;
- le volet mobile cette fois selon l'invention comporte, au niveau d'une surface arrière située du côté de la traverse, une dorsale qui s'étend en saillie de la surface arrière, la traverse comportant une rainure située en regard de la dorsale afin de permettre au volet mobile de pouvoir pivoter autour de son axe. Le terme « arrière » est à considérés relativement à une direction du flux d'air destiné le traverser le conduit de la traverse. Un tel volet mobile permet de faciliter sa préhension, notamment lors du montage ou des opérations de maintenance ;
- dans un plan formé par le volet mobile, les organes de fixation sont situés au-dessus d'un centre de gravité du volet mobile. En d'autres termes, les organes de fixation sont situés à proximité d'un bord longitudinal supérieur du volet mobile, et à distance d'un bord longitudinal inférieur dudit volet mobile. En d'autres termes encore, l'axe de rotation est proximal du bord longitudinal supérieur du volet mobile, et l'axe de rotation est distal du bord longitudinal inférieur dudit volet mobile ;
- l'axe de rotation est parallèle au bord longitudinal du volet mobile ;
- le conduit n'est formé que par une seule cellule. On comprend que le conduit forme un volume unique. En d'autres termes, le conduit est non compartimenté : il est formé d'une celle cellule ;
- l'ensemble de régulation est formé d'un matériau plastique, tel que par exemple du polypropylène. De manière avantageuse, le matériau plastique formant l'ensemble de régulation comporte en outre une charge en fibre de verre afin d'améliorer sa solidité. En étant du type d'un polypropylène, l'ensemble de régulation est dur, résistant aux déformations mécaniques. En étant chargé en fibre de verre, le matériau plastique formant l'ensemble de régulation a des propriétés mécaniques de résistance aux déformations renforcées ;
- le volet mobile, les organes de fixation et la traverse sont tous issus d'un même procédé de moulage. Un procédé de formage industriel par moulage permet d'obtenir à moindre coût un grand nombre d'unités identiques par répétition de l'utilisation d'un même moule. Par « même procédé de moulage », on comprend qu'un protocole identique ou similaire de moulage est employée pour obtenir le volet mobile, les organes de fixation et la traverse.

Selon un deuxième aspect de l'invention, il est proposé un arrangement de pare-chocs comportant un ensemble de régulation conforme au premier aspect de l'invention ou selon l'un quelconque de ses perfectionnements et un pare-chocs avant de véhicule automobile, l'ensemble de régulation étant fixé solidairement au pare-chocs avant et situé en arrière dudit pare-chocs, relativement à un axe longitudinal du véhicule automobile, une armature de pare-chocs étant mise en appui contre une face supérieure de la traverse.

Dans le véhicule automobile équipé de l'arrangement de pare-chocs conforme au deuxième aspect de l'invention, le pare-chocs avant est destiné à protéger des éléments situés en arrière dudit pare-chocs consécutivement à une collision pouvant survenir à l'avant du véhicule automobile. Le pare-chocs avant est notamment destiné à protéger un système moteur du véhicule automobile et des occupants d'un habitacle du véhicule automobile.

Dans l'arrangement de pare-chocs conforme au deuxième aspect de l'invention, l'armature de pare-chocs permet de maintenir la traverse de l'ensemble de régulation conforme au premier aspect de l'invention.

Dans l'arrangement de pare-chocs conforme au deuxième aspect de l'invention, l'armature de pare-chocs est mise en appui contre la face supérieure de la traverse. Par mise en appui, on comprend que l'armature coopère avec la face supérieure de la traverse. Dans la traverse, la face supérieure est avantageusement supérieure à la face avant de la traverse et à la face arrière de la traverse. Le terme « supérieure » s'entend par un positionnement de la traverse lorsque l'arrangement de pare-chocs conforme au deuxième aspect de l'invention équipe un véhicule automobile.

Dans le véhicule automobile équipé de l'arrangement de pare-chocs selon l'invention, le flux d'air est capté en face avant du véhicule automobile avant d'intégrer l'ensemble de régulation.

Selon un troisième aspect de l'invention, il est proposé un véhicule automobile comportant un arrangement de pare-chocs conforme au deuxième aspect de l'invention ou selon l'un quelconque de ses perfectionnements.

Dans le véhicule automobile conforme au troisième aspect de l'invention, l'ensemble de régulation de l'arrangement de pare-chocs permet d'alimenter en air extérieur un circuit de régulation thermique du véhicule automobile telle une installation de ventilation, de chauffage, et/ou de climatisation autrement appelée installation HVAC, pour l'acronyme anglais « Heating, Ventilating and Air-Conditioning », et/ou un système moteur du véhicule automobile.

Dans le véhicule automobile conforme au troisième aspect de l'invention, l'ensemble de régulation d'air capte un flux d'air extérieur au véhicule automobile en face avant dudit véhicule automobile. Le degré d'ouverture du volet mobile de l'ensemble de régulation est modifié en fonction des besoins du véhicule automobile selon l'invention en matière d'aérodynamique et/ou de refroidissement de composants agencés dans une installation de ventilation, de chauffage, et/ou de climatisation autrement appelée installation HVAC, pour l'acronyme anglais « Heating, Ventilating and Air-Conditioning », et/ou un système moteur du véhicule automobile selon l'invention.

Dans le véhicule automobile conforme au troisième aspect de l'invention, le volet mobile est destiné à réguler l'entrée du flux d'air dans le conduit de la traverse. Dans le véhicule automobile selon l'invention, le flux d'air est canalisé par le conduit et orienté vers le circuit de régulation thermique du véhicule automobile lorsque le volet mobile de l'ensemble de régulation est en position d'ouverture ou dans une position intermédiaire entre la position d'ouverture et la position de fermeture. Le flux d'air est bloqué lorsque le volet mobile de l'ensemble de régulation est en position de fermeture, et le conduit de la traverse est non alimenté. Conformément à l'invention, le flux d'air entrant dans le conduit de la traverse alimente intégralement le circuit de régulation thermique dans le véhicule automobile selon l'invention.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique d'un véhicule automobile conforme au troisième aspect de l'invention ;
[Fig.2] illustre une vue schématique d'un arrangement de pare-chocs conforme au premier aspect de l'invention comprenant un ensemble de régulation d'un flux d'air pour véhicule automobile conforme au premier aspect de l'invention, ledit ensemble de régulation étant dans une position de fermeture ;
[Fig.3] illustre une vue en coupe longitudinale de l'arrangement de pare-chocs conforme au premier aspect de l'invention illustré en FIGURE 2, l'ensemble de régulation étant dans une position d'ouverture intermédiaire ;
[Fig.4] illustre une vue schématique de l'arrangement de pare-chocs conforme au premier aspect de l'invention illustré en FIGURE 2, l'ensemble de régulation étant dans position d'ouverture intermédiaire ;
[Fig.5] illustre une vue schématique d'un arrangement de pare-chocs conforme au premier aspect de l'invention comprenant un ensemble de régulation d'un flux d'air pour véhicule automobile conforme au premier aspect de l'invention dans une position d'ouverture.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

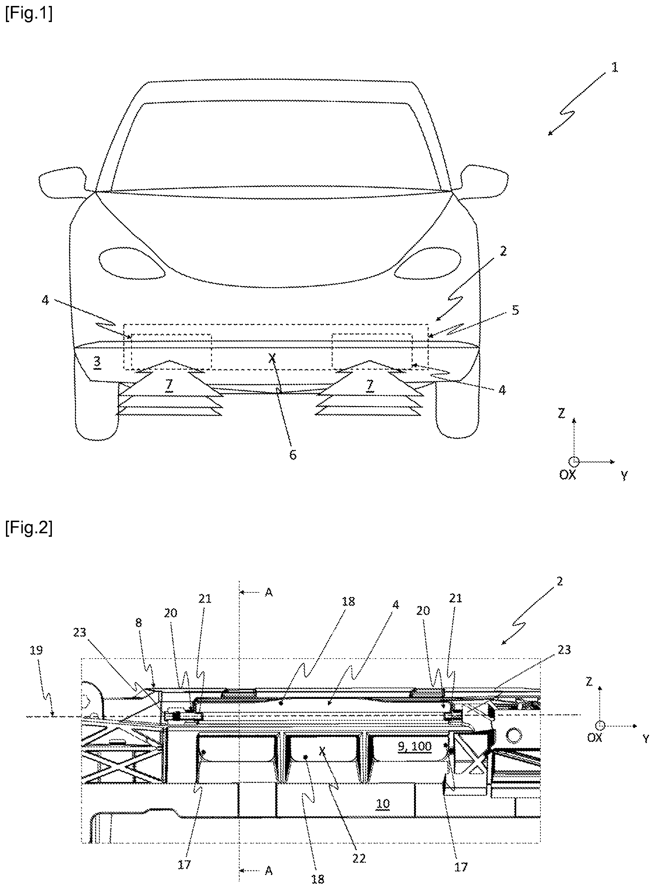

La FIGURE 1 illustre une vue schématique d'un véhicule automobile 1 conforme au troisième aspect de l'invention. Dans la suite de la description, on définit un référentiel dans lequel sont définis un axe longitudinal OX, un axe transversal OY et un axe vertical OZ. L'axe longitudinal OX correspond à une trajectoire du véhicule automobile 1 lorsqu'il est en marche avant, en ligne droite et sur une route plate. L'axe longitudinal OX correspond à une direction allant de l'avant à l'arrière du véhicule automobile 1, et il est orienté depuis l'avant vers l'arrière du véhicule automobile 1. On définit également une direction longitudinale parallèle à l'axe longitudinal OX, les adjectifs « avant », « arrière » ou « frontal » se réfèrent à cette direction de référence, le terme « longueur » également. L'axe transversal OY correspond à l'axe autour desquels des roues du véhicule automobile 1 tournent, et le sens de l'axe OY est orienté depuis un côté passager vers un côté conducteur, dans la norme non anglo-saxonne. On définit également une direction transversale parallèle à l'axe transversal OY, et les adjectifs « latéral » ou « transversal » se réfèrent à cette direction de référence, le terme « largeur » également. L'axe vertical OZ est un axe perpendiculaire simultanément à l'axe OX et à l'axe OY, et qui est orienté depuis un plancher du véhicule automobile 1 vers un toit dudit véhicule automobile 1, les adjectifs « supérieur » et « inférieur » se réfèrent à cette direction de référence, le terme « hauteur » également.

La FIGURE 1 montre que le véhicule automobile 1 comporte un arrangement 2 de pare-chocs 3 conforme au deuxième aspect de l'invention. La FIGURE 1 montre que l'arrangement 2 de pare-chocs 3 comprend un ensemble de régulation 4 conforme au premier aspect de l'invention, un pare-chocs 3 avant de véhicule automobile 1 et une armature 5 de pare-chocs 3. L'ensemble de régulation 4 et l'armature 5 de pare-chocs 3 sont illustrés en pointillés et sont montés en arrière dudit pare-chocs 3 relativement à un axe longitudinal 6 du véhicule automobile 1 s'étendant selon la direction longitudinale OX. On comprend dans la FIGURE 1 que l'ensemble de régulation 4 est fixé solidairement au pare-chocs 3 avant.

En l'espèce, le véhicule automobile 1 comprend deux ensembles de régulation 4 disposés symétriquement de part et d'autre de l'axe longitudinal 6 du véhicule automobile 1. Chaque ensemble de régulation 4 permet de réguler un flux d'air passant au travers de l'arrangement 2 de pare-chocs 3 conforme au deuxième aspect de l'invention. Le flux d'air est représenté en FIGURE 1 par une série de flèches 7.

En référence aux FIGURES 2 à 5, l'arrangement 2 de pare-chocs 3 et l'ensemble de régulation 4 sont illustrés. L'ensemble de régulation 4 comprend une traverse 8 et un volet mobile 9 fixé solidairement à la traverse 8.

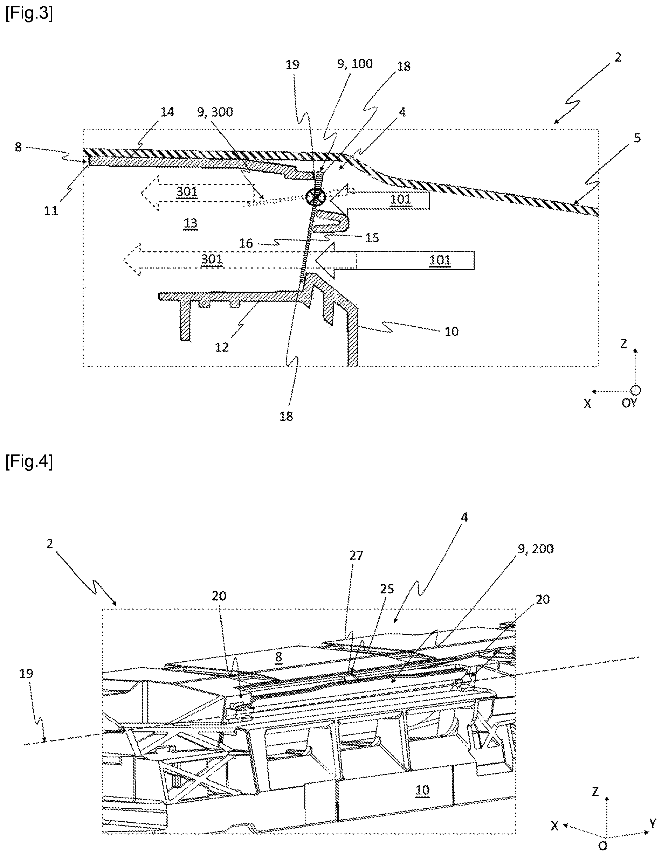

La FIGURE 3 montre une coupe longitudinale AA de l'arrangement 2 de pare-chocs 3, la coupe longitudinale AA étant illustrée en FIGURE 2. La FIGURE 3 montre que la traverse 8 comprend une face avant 10 et une face arrière 11. La traverse 8 comprend, entre sa face avant 10 et sa face arrière 11, un conduit 12, délimitant une cellule 13 unique, destiné à laisser passer le flux d'air provenant de l'avant de l'ensemble de régulation 4. Une entrée du conduit 12, pouvant être fermée par le volet mobile 9 comme décrit ci-après, est formée dans la face avant 10 de la traverse. Dans les FIGURES 2, 4 et 5, l'arrangement 2 de pare-chocs 3 est représenté depuis la face avant 10 de la traverse 8. La FIGURE 3 montre que la traverse 8 comprend en outre une face supérieure 14 en appui de l'armature 5 de pare-chocs 3.

La FIGURE 3 montre que le volet mobile 9 comprend une surface avant 15 opposée à une surface arrière 16. Le volet mobile 9 prend la forme d'une plaque délimitée par deux bords latéraux 17 et deux bords longitudinaux 18 comme illustré en FIGURE 2.

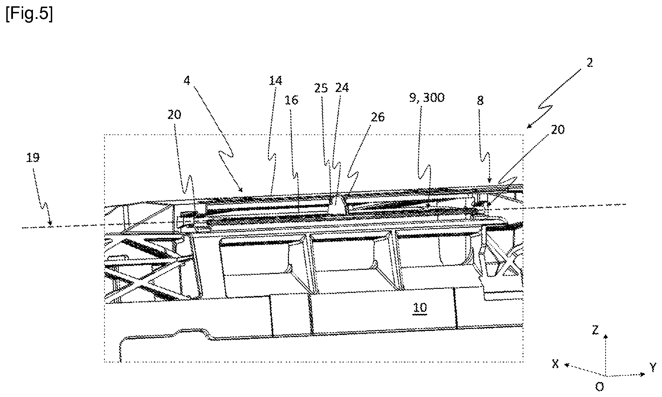

La FIGURE 3 montre que le volet mobile 9 est mobile en rotation autour d'un axe de rotation 19 et relativement à la traverse 8. L'axe de rotation 19 du volet mobile 9 est parallèle aux bords longitudinaux 18 du volet mobile 9 comme montré en FIGURE 2 et 3. En FIGURE 3, le volet mobile 9 adopte une position de fermeture 100 en traits pleins. Une position d'ouverture 300 est symbolisée en FIGURE 3 par le volet mobile 9 en traits discontinus. En FIGURE 2, le volet mobile 9 adopte la position de fermeture 100. En FIGURE 5, le volet mobile 9 adopte la position d'ouverture 300. En FIGURE 4 le volet mobile 9 adopte une position d'ouverture intermédiaire 200. On comprend que le volet mobile 9 est configuré pour pivoter autour de son axe de rotation 19 pour adopter l'une ou l'autre des positions 100, 200, 300, depuis la position d'ouverture 300 vers la position de fermeture 100, et inversement, et que la position d'ouverture intermédiaire 200 illustrée en FIGURE 4 est une position d'ouverture intermédiaire 200 parmi d'autres.

La FIGURE 3 montre que le volet mobile 9 de l'ensemble de régulation 4 conforme au premier aspect de l'invention pivote relativement à la traverse 8 de manière à réguler l'entrée du flux d'air au travers de l'ensemble de régulation 4, d'avant en arrière selon une direction d'admission du conduit 12 formé dans la traverse 8 et correspondant à la direction longitudinale OX. Dans la FIGURE 3, le volet mobile 9 en position de fermeture 100 bloque le flux d'air représenté par des flèches en traits pleins 101. Dans la FIGURE 3, le volet mobile 9 en position d'ouverture 300 autorise l'admission du flux d'air représenté par des flèches en traits discontinus 301.

Les FIGURES 2, 4 et 5 montrent que le volet mobile 9, rapporté sur la traverse 8, est fixé solidairement à la face avant 10 de la traverse 8 par l'intermédiaire d'organes de fixation 20. La FIGURE 2 montre que les organes de fixation 20 du volet mobile 9 prennent la forme de portées cylindriques 21 qui s'étendent en saillie au-delà des bords latéraux 17 du volet mobile 9 et au-dessus d'un centre de gravité 22 du volet mobile 9. Les portées cylindriques 21 sont coaxiales entre elles et matérialisant l'axe de rotation 19 autour duquel le volet mobile 9 peut pivoter relativement à la traverse 8. Les portées cylindriques 21 formant les organes de fixation 20 du volet mobile 9 coopèrent avec des éléments de fixation 23 de la traverse 8 situés de part et d'autre du conduit 12.

La FIGURE 5 montre que la surface arrière 16 du volet mobile 9 s'oriente du côté de la face supérieure 14 de la traverse 8 lorsque le volet mobile 9 est en position d'ouverture 300. La surface arrière 16 du volet mobile 9 comporte une dorsale 24 qui s'étend en saillie de la surface arrière 16. En l'espèce, la dorsale 24 forme une plaque qui s'étend selon l'axe vertical OZ et comprenant une bordure libre 26 courbe. La dorsale 24 est centrée transversalement sur la surface arrière 16. La traverse 8 comporte une rainure 25 située en regard de la dorsale 24, logeant la dorsale 24 du volet mobile 9 et permettant au volet mobile 9 de pouvoir pivoter autour de son axe afin d'adopter la position d'ouverture 300 telle qu'illustrée en FIGURE 5. La rainure 25 comprend un fond 27, visible en FIGURE 4, destiné à être située en regard de la bordure libre 26 de la dorsale 24 lorsque le volet mobile 9 est en position d'ouverture 300.

En synthèse, l'invention concerne un ensemble de régulation 4 d'un flux d'air pour véhicule automobile 1. L'ensemble de régulation 4 est destiné à être monté en face avant 10 et en arrière d'un pare-chocs 3 du véhicule automobile 1. L'ensemble de régulation 4 comporte une traverse 8 et un volet mobile 9 fixé solidairement à la traverse 8 conformément à l'invention, le volet mobile 9 pouvant pivoter autour d'un axe de rotation 19 et relativement à la traverse 8. La traverse 8 présente un conduit 12. Le conduit 12 de la traverse 8 est destiné à laisser passer un flux d'air provenant de l'avant de l'ensemble de régulation 4, le conduit 12 étant ménagé entre une face avant 10 de la traverse 8 et une face arrière 11 de la traverse 8. En étant mobile en rotation, le volet mobile 9 peut adopter une position d'ouverture 300 et une position de fermeture 100 du conduit 12.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons conformément aux revendications. En particulier toutes les variantes et modes de réalisation décrits précédemment sont combinables entre eux en accord avec l'invention.

## Revendications

1. Ensemble de régulation (4) d'un flux d'air pour véhicule automobile (1), l'ensemble de régulation (4) étant destiné à être monté en face avant et en arrière d'un pare-chocs (3) du véhicule automobile (1), l'ensemble de régulation (4) comportant :
- une traverse (8) présentant un conduit (12) destiné à laisser passer un flux d'air provenant de l'avant de l'ensemble de régulation (4), le conduit (12) étant ménagé entre une face avant (10) de la traverse (8) et une face arrière (11) de la traverse (8) ;
- un volet mobile (9) en rotation entre une position d'ouverture (300) et une position de fermeture (100) du conduit (12), le volet pivotant autour d'un axe de rotation (19) ;
**caractérisé en ce que** le volet mobile (9) est fixé solidairement à la traverse (8), le volet mobile (9) pouvant pivoter autour de son axe de rotation (19) et relativement à la traverse (8),
**caractérisé en ce que** le volet mobile (9) comporte, au niveau d'une surface arrière (16) située du côté de la traverse (8), une dorsale (24) qui s'étend en saillie de la surface arrière (16), la traverse (8) comportant une rainure (25) située en regard de la dorsale (24) afin de permettre au volet mobile (9) de pouvoir pivoter autour de son axe.

2. Ensemble de régulation (4) selon la revendication précédente, dans lequel le volet mobile (9) est fixé solidairement sur la face avant (10) de la traverse (8).

3. Ensemble de régulation (4) selon la revendication précédente, dans lequel le volet mobile (9) est rapporté sur la traverse (8), le volet mobile (9) comportant des organes de fixation (20) afin de le fixer solidairement à la traverse (8).

4. Ensemble de régulation (4) selon la revendication précédente, dans lequel les organes de fixation (20) du volet mobile (9) sont situés de part et d'autre du volet mobile (9), des éléments de fixation (23) de la traverse (8) étant situés de part et d'autre du conduit (12).

5. Ensemble de régulation (4) selon la revendication précédente, dans lequel les organes de fixation (20) du volet mobile (9) matérialisent l'axe de rotation (19) du volet mobile (9), ledit volet mobile (9), et éventuellement les organes de fixation (20) dudit volet mobile (9), pouvant pivoter autour de l'axe de rotation (19) et relativement à la traverse (8).

6. Ensemble de régulation (4) selon l'une quelconque des revendications 4 ou 5, dans lequel le volet mobile (9) prend la forme d'une plaque délimitée par deux bords latéraux (17) et deux bords longitudinaux (18), les organes de fixation (20) étant situés au niveau des bords latéraux (17) du volet mobile (9).

7. Ensemble de régulation (4) selon la revendication précédente, dans lequel les organes de fixation (20) du volet mobile (9) prennent la forme de portées cylindriques (21) qui s'étendent en saillie au-delà des bords latéraux (17), les portées cylindriques (21) étant coaxiales entre elles et matérialisant l'axe de rotation (19) autour duquel le volet mobile (9) pivote relativement à la traverse (8).

8. Arrangement (2) de pare-chocs (3) comportant un ensemble de régulation (4) selon l'une quelconque des revendications précédentes et un pare-chocs (3) avant de véhicule automobile (1), l'ensemble de régulation (4) étant fixé solidairement au pare-chocs (3) avant et situé en arrière dudit pare-chocs (3), relativement à un axe longitudinal (6) du véhicule automobile (1), une armature (5) de pare-chocs (3) étant mise en appui contre une face supérieure (14) de la traverse (8).

9. Véhicule automobile (1) comportant un arrangement (2) de pare-chocs (3) selon la revendication précédente. 1

## Patentansprüche

1. Steuereinheit (4) für einen Luftstrom für ein Kraftfahrzeug (1), wobei die Steuereinheit (4) dazu bestimmt ist, vor und hinter einem Stoßfänger (3) des Kraftfahrzeugs (1) montiert zu werden, wobei die Steuereinheit (4) folgendes umfasst:
- ein Querträger (8) mit einem Kanal (12) zum Durchlassen eines Luftstroms von der Vorderseite der Regelanordnung (4), wobei der Kanal (12) zwischen einer Vorderseite (10) des Querträgers (8) und einer Rückseite (11) des Querträgers (8) angeordnet ist;
- eine bewegliche Klappe (9), die zwischen einer Öffnungsstellung (300) und einer Schließstellung (100) des Kanals (12) drehbar ist, wobei die Klappe um eine Drehachse (19) schwenkbar ist;
**dadurch gekennzeichnet, dass** die bewegliche Klappe (9) fest mit dem Querträger (8) verbunden ist, wobei die bewegliche Klappe (9) um ihre Drehachse (19) und relativ zum Querträger (8) schwenkbar ist,
**dadurch gekennzeichnet, dass** die bewegliche Klappe (9) an einer hinteren Fläche (16) auf der Seite des Querträgers (8) einen Rücken (24) aufweist, der sich über die hintere Fläche (16) hinaus erstreckt, wobei der Querträger (8) eine Nut (25) aufweist, die gegenüber dem Rücken (24) angeordnet ist, um zu ermöglichen, dass die bewegliche Klappe (9) um ihre Achse schwenkbar ist.

2. Regelungsanordnung (4) nach dem vorhergehenden Anspruch, wobei die bewegliche Klappe (9) integral an der Vorderseite (10) des Querträgers (8) befestigt ist.

3. Regelungsanordnung (4) nach dem vorhergehenden Anspruch, bei der die bewegliche Klappe (9) an dem Querträger (8) angebracht ist, wobei die bewegliche Klappe (9) Befestigungselemente (20) aufweist, um sie einstückig an dem Querträger (8) zu befestigen.

4. Regelungsanordnung (4) nach dem vorhergehenden Anspruch, bei der die Befestigungselemente (20) der beweglichen Klappe (9) auf beiden Seiten der beweglichen Klappe (9) angeordnet sind, wobei Befestigungselemente (23) des Querträgers (8) auf beiden Seiten der Leitung (12) angeordnet sind.

5. Regelungsanordnung (4) nach dem vorhergehenden Anspruch, wobei die Befestigungselemente (20) der beweglichen Klappe (9) die Drehachse (19) der beweglichen Klappe (9) ausbilden, wobei die bewegliche Klappe (9) und gegebenenfalls die Befestigungselemente (20) der beweglichen Klappe (9) um die Drehachse (19) und relativ zum Querträger (8) schwenkbar sind.

6. Regelungsanordnung (4) nach einem der Ansprüche 4 oder 5, bei der die bewegliche Klappe (9) die Form einer Platte hat, die durch zwei Seitenränder (17) und zwei Längsränder (18) begrenzt ist, wobei die Befestigungselemente (20) an den Seitenrändern (17) der beweglichen Klappe (9) angeordnet sind.

7. Regelungsanordnung (4) nach dem vorhergehenden Anspruch, bei der die Befestigungselemente (20) der beweglichen Klappe (9) die Form zylindrischer Auflageflächen (21) annehmen, die sich über die Seitenränder (17) hinaus erstrecken, wobei die zylindrischen Auflageflächen (21) zueinander koaxial sind und die Drehachse (19) bilden, um die die bewegliche Klappe (9) relativ zu der Traverse (8) schwenkbar ist.

8. Stoßfängeranordnung (2) (3) mit einer Regelanordnung (4) nach einem der vorhergehenden Ansprüche und einem vorderen Stoßfänger (3) eines Kraftfahrzeugs (1), wobei die Regelanordnung (4) fest an dem vorderen Stoßfänger (3) befestigt ist und sich relativ zu einer Längsachse (6) des Kraftfahrzeugs (1) hinter dem Stoßfänger (3) befindet, wobei ein Rahmen (5) des Stoßfängers (3) an einer Oberseite (14) des Querträgers (8) anliegt.

9. Kraftfahrzeug (1) mit einer Stoßfängeranordnung (2) (3) nach dem vorhergehenden Anspruch.

## Claims

1. Control assembly (4) for a motor vehicle air flow (1), the control assembly (4) being intended to be mounted on the front face and in rear with a bumper (3) of the motor vehicle (1), the control assembly (4) comprising:
- a cross-member (8) having a conduit (12) intended to let through a flow of air coming from the front of the regulating assembly (4), the conduit (12) being provided between a front face (10) of the cross-member (8) and a rear face (11) of the cross-member (8);
- a movable flap (9) rotating between an opening position (300) and a closing position (100) of the conduit (12), the flap pivoting about an axis of rotation (19);
**characterised in that** the movable flap (9) is fixed integrally to the cross-member (8), the movable flap (9) being able to pivot about its axis of rotation (19) and relative to the cross-member (8),
wherein the movable flap (9) comprises, on the level of a rear surface (16) located on the side of the cross-member (8), a back (24) which extends projecting from the rear surface (16), the cross-member (8) comprising a groove (25) located facing the back (24) in order to allow the movable flap (9) to be able to pivot about its axis.

2. Control assembly (4) according to the previous claim, in which the movable flap (9) is fixed integrally to the front face (10) of the cross-member (8).

3. Control assembly (4) according to the previous claim, in which the movable flap (9) is attached to the cross-member (8), the movable flap (9) comprising fixing members (20) in order to fix it securely to the cross-member (8).

4. Control assembly (4) according to the previous claim, in which the fixing members (20) of the movable flap (9) are located on either side of the movable flap (9), fixing elements (23) of the cross-member (8) being located on either side of the conduit (12).

5. Control assembly (4) according to the previous claim, in which the fixing members (20) of the movable flap (9) materialise the axis of rotation (19) of the movable flap (9), said movable flap (9), and optionally the fixing members (20) of said movable flap (9), being able to pivot about the axis of rotation (19) and relative to the cross-member (8).

6. Control assembly (4) according to either of Claims 4 and 5, in which the mobile flap (9) takes the shape of a plate delimited by two lateral edges (17) and two longitudinal edges (18), the fixing members (20) being located at the level of the lateral edges (17) of the mobile flap (9).

7. Control assembly (4) according to the previous claim, in which the fixing members (20) of the movable flap (9) take the form of cylindrical bearing surfaces (21) which extend projecting beyond the lateral edges (17), the cylindrical bearing surfaces (21) being coaxial with one another and materialising the axis of rotation (19) around which the movable flap (9) pivots relative to the cross-member (8).

8. Arrangement (2) for a bumper (3) comprising a regulating assembly (4) according to any one of the previous claims and a front bumper (3) of a motor vehicle (1), the regulating assembly (4) being fixedly attached to the front bumper (3) and located at the rear of said bumper (3), relative to a longitudinal axis (6) of the motor vehicle (1), a bumper frame (5) (3) being supported against an upper face (14) of the cross-member (8).

9. Motor vehicle (1) comprising an arrangement (2) of bumpers (3) according to the previous claim.
